# EUROPEAN PATENT SPECIFICATION

(11) **EP 0 384 053 B1**
(45) Date of publication and mention of the grant of the patent: **08.06.1994**
(21) Application number: 89301791.3
(22) Date of filing: 23.02.1989
(51) Int. Cl.: H02G 15/007, H02G 15/18, H01R 4/72

(54) **Device for axial strain relief**
Vorrichtung zur Entlastung von axialen Beanspruchungen
Dispositif d'atténuation de contraintes axiales

(43) Date of publication of application: 29.08.1990
(73) Proprietor: RAYCHEM LIMITED, London, EC4 1NL (GB)
(72) Inventor: Barnwell, David Edward, Swindon Wiltshire (GB); Winfield, Philip Raymond, Swindon Wiltshire (GB); Hutt, Norman, Wiltshire (GB); Drinkwater, Ian Clive, Swindon Wilts (GB); Rowland, Stephen John, Wiltshire (GB)
(74) Representative: Benson, John Everett

(56) References cited:
- EP-A- 0 175 554
- US-A- 2 536 003
- US-A- 3 691 505
- US-A- 3 708 611
- US-A- 4 144 404
- IBM TECHNICAL DISCLOSURE BULLETIN. vol. 16, no. 10, March 1974, NEW YORK US pages 3331 - 3332; R.T. EVANS: "ANNULAR RING COAXIAL TERMINATION"

## Description

This invention relates to an assembly for providing axial strain relief to a splice between two cables, especially for providing strain relief to splices between cables incorporating an apertured layer, for example a braided layer.

Supply cables such as telecommunications and high voltage energy-carrying cables typically include a braided layer, usually encompassing one or more insulated core conductors. Such cables, frequently need to be spliced for example at branch-out or distribution points. In some applications, for example where the cables are aerial, the spliced cables may be subject to axial stress during their lifetime. This stress may damage the formed splice causing temporary signal breakdown until costly repair can be instigated.

Hitherto methods have been used to attempt to provide strain-relief to spliced cables. It is known, for example, for aerial telecommunications cables, to knot the cables together close to their spliced ends, so that any axial stress is passed via the knotted portion to the cable on the other side of the knot, by-passing the splice region. This is a clumsy solution, and moreover may cause damage to the core conductors of the cable since the cable tends to "cut through itself", under axial load, in the knotted region.

IBM Technical Disclosure Bulletin Volume 16 10 March 1974 discloses an arrangement for attaching a coaxial cable to a printed circuit card using a cylinder ring and a heat-shrinkable sleeve. There is no disclosure of splicing cables together and no suggestion on how to improve bonding between a braided screen and a heat-shrinkable sleeve so as to improve the resistance to creep of cable splices.

US 2 536 003 discloses making splice connections between coaxial cables using arrangements of inner and outer sleeves. Connections are made by crimping and the inner sleeve is provided to resist crimping forces. There is no disclosure of how to obtain better bonding between a braided screen and an outer sleeve using the bonding agent so as to reduce creep in spliced cables.

The present invention provides an alternative arrangement for transferring stress from one side of the splice to the other without applying stress to the conductor connections in the splice itself.

A first aspect of the invention provides an assembly for providing axial strain relief to a splice between two cables that each comprise an apertured layer; the assembly comprising:
(a) a spacer that can be positioned to space the apertured layers of each cable from the inner components thereof;
(b) a support sleeve that can be positioned to surround each of the apertured layers; and
(c) a bonding material which can flow during installation of the assembly through the apertured layers, to bond the sleeve to each of the apertured layers.

A second aspect of the invention provides a method of providing axial strain relief to a splice between two cables that each comprise an apertured layer comprising
(1) positioning a spacer on each cable to space the apertured layer from the inner components of the cable
(2) positioning a support sleeve around the spaced apertured layers;
(3) providing bonding material
(4) causing the bonding material to flow through the apertures of the apertured layers to bond the support sleeve to the apertured layers.

A third aspect of the invention provides a strain-relieved splice between two cables each of which comprises an apertured layer, comprising a spacer positioned on each cable to space the apertured layer from the inner components, a sealing sleeve positioned around the apertured layers, and a bonding material which has flowed through the apertured layer to bond the sleeve to the apertured layer and preferably also to the spacer.

The bonding of the support sleeve to the apertured layer means that when an axial load is applied to the cables it is transferred directly from one apertured layer, via the support sleeve, to the other apertured layer on the other side of the splice. Thus stress on the cable splice itself is minimised.

The use of spacers in combination with the apertured layers of the cables provides a convenient and effective way of forming an adequate bond between the cables on either side of the splice and the support sleeve, which allow any stress to be transferred by the sleeve. Surprisingly, a greatly improved axial strength of the splice is achieved when spacers are used compared to when they are absent. In particular the splice formed with spacers used is found to be particularly more resistant to creep when subjected to axial load.

The invention refers to a splice between cables incorporating an apertured layer. The "apertured layer" may be any layer other than the central core of the cables. For example, it may be the outermost layer of the cables, but is more generally an intermediate layer. For many typical applications the apertured layer is a braided layer provided around the core conductors, and itself surrounded by an insulating jacket. The braided layer may be provided for electromagnetic screening.

Similarly the invention refers to "inner components" of the cable with reference to the apertured layer. This term is used to refer to any part of layers of the cable within the apertured layers. These are typically conductors and insulating layers.

During installation of the assembly the spacers are positioned on each cable on either side of the splice, to space each apertured layer from the inner components. Preferably each spacer is positioned immediately beneath each apertured layer, and can conveniently be visualised as lifting each apertured layer from the inner components to provide a tent-shaped space on either side of it between the apertured layer and the inner components. The support sleeve is then positioned around each apertured layer and the bonding material caused to flow through the apertured layers to bond the sleeve to each apertured layer. The spacing of the apertured layers from the inner components allows the bonding material to flow through the apertures to bond to both the outer surface of the apertured layer, and also the aperture edges, preferably also to the inner surface of the apertured layer. The result is effectively a composite structure comprising as sequential layers: sleeve, bonding material, apertured layer, bonding material.

Where the apertured layers are not the outermost layer of the cables, the cable ends are preferably stripped to bare the apertured layers so that a maximum length of apertured layer is exposed, which can be bonded directly to the support sleeve.

In preferred embodiments, when the spacers are positioned, the apertures in the apertured layer increase in size, thereby facilitating the flow of bonding material therethrough. Where the apertured layer is a braid, the increase in aperture size generally occurs by a change in braid angle as the spacer is inserted.

In one embodiment the spacers comprise a material that can itself be bonded by the bonding material to the sleeve. In this preferred case the composite structure which is preferably formed comprises, as sequential layers, sleeve, bonding material, apertured layer, bonding material, spacer.

The support sleeve preferably has high axial strength to provide the axial strain relief for the splice. Preferably its axial tensile strength is at least as high as the axial strength of the unspliced portions of each of the cables. This means that the spliced region is not the weakest part of the cable network. Preferably the support sleeve comprises a fabric, with high strength fibres in the axial directions. A particular preferred high strength fibre is glass fibre.

Typically splices between cables not only need axial strength relief, but also need environmental protection, for example against contaminants and moisture. Preferably the support sleeve provides this environmental protection as well as the usual strain relief. To provide this function the support sleeve preferably comprises a moisture impermeable polymeric material. In preferred embodiments, for convenient sealing, the support sleeve comprises a heat recoverable polymeric sleeve.

By a heat recoverable article is meant an article whose dimensional configuration may be made to change when subjected to appropriate treatment. Usually these articles recover to an original shape from which they have previously been deformed, but the term "recoverable", as used herein, also includes an article which adopts a new configuration, even if it has not been previously deformed.

Where a heat recoverable support sleeve is used it is preferably heat shrinkable. It is preferably provided of a size larger in diameter that the cables or splice region to be protected and strain relieved, and shrunk into sealing engagement therewith by the application of heat.

It is especially preferred that the support sleeve comprises a heat recoverable fabric material. Such material are described in the following patent publications and copending applications: US 3669157 (Carolina Narrow Fabric), European Patent Application Publication Nos. 0116393 (MP0790), 0116391 (RK169), 0117026 (RK176), 0115905 (RK177), 0116392 (RK178), 0116390 (RK179), 0117025 (RK181), 0118260 (RK189), 0137648 (RK205), 0153823 (RK228), 0175554 (RK246), European Patent Application No. 86303767.7 (RK273), British Patent Application Nos. 8528966 (RK289), 8610813 (RK296), 8529800 (B118) U.S. Patent Application No. 821662 (B121) and British Patent Application No. 8625369 (RK323). These heat recoverable fabrics are typically made into sleeves with heat-shrinkable fibres in the circumferential direction or heat stable or shrinkable fibres in the axial direction, and are typically laminated on one or both major surfaces with polymeric material. For the present application a heat recoverable fabric with shrinkable fibres in the circumferential direction and high strength fibres in the axial direction (to provide the axial strain relief) laminated with polymeric material (to provide the environmental sealing) is especially preferred.

According to the invention a bonding material is used to bond the sleeve to each of the apertured layers. The bonding may be by adhesion. Instead, or additionally, the bonding may result from mechanical interlocking caused by flow and subsequent solidification of the bonding material into the apertures of the apertured layer, and/or, where the support sleeve comprises a fabric, into the interstices of the fabric. Thus the formation of a composite structure caused by flow and solidification of the bonding material may cause a bond between the support sleeve and the apertured layer, irrespective of whether the bonding material also adheres to either the support sleeve or the apertured layer. In one embodiment the support sleeve comprises a heat-recoverable fabric laminated on only its outer surface with polymeric material. This exposes the interstices in the fabric, on the inner surface of the sleeve, for mechanical interlocking with the flowed bonding material.

Any number of spacers may be used to lift the apertured layers to facilitate the flow of bonding material therethrough. One spacer may be used. Preferably at least two spacers are used, one on each cable.

The spacers may be any suitable shape. Preferably they are annular and surround the cable thereby facilitating flow of bonding material around the entire circumference of the cable.

The bonding material is preferably caused to flow by the application of heat. Conveniently where the support sleeve is heat recoverable the same heat source is used to flow the bonding material and to recover the support sleeve. The heat source may be externally applied, for example by a hot air gun or gas flame. Longer heat application may be required around the spacers than around the remainder of the support sleeve in order properly to flow the bonding material to form the composite structure. Therefore in some cases it is advantageous for the spacers to comprise a material that can act as a heat-shield so that there is no heat-damage to the inner conductors within the spacers. For example the spacers may comprise metal.

The bonding material may be provided as a discrete entity or as a coating on one of the other members. Preferably the bonding material is provided as a lining sleeve on the support sleeve. The amount of bonding material is preferably sufficient to provide the desired composite structure after installation. The amount is preferably more than enough to fill the apertures in the aperture layer, since on installation, it flows to fill these apertures and also bonds to the outer support sleeve. In one embodiment the bonding material is provided as a layer which is at least half as thick, preferably as thick as the apertured layer.

The support sleeve and the spacers may be sleeves of closed cross-section, or may be wraparound. Where they are sleeves of closed cross-section they must be pre-positioned over one or both of the cables before the splice is made. Where they are wraparound they may be installed later.

Any suitable materials may be used for the sleeve the bonding material and the spacer. Preferably they are selected so that the bonding material bonds to the sleeve, the cable jacket and the spacer, for example by adhesion or by mechanical interlocking, to provide the optimum composite structure.

Preferred materials for the sleeve include a heat recoverable fabric comprising circumferential polyethylene shrinkable fibre and glass fibre axial fibres laminated with polyethylene. Preferred materials for the spacer include metal and various polymers. Preferred material for the sealing material include various adhesives. Preferably the sealing material is a thermoplastic material or a thermosetting material, for example an ionomer.

The installation of an assembly according to the invention is now described, by way of example, with reference to the accompanying drawings, wherein;
- Figure 1: is a side elevation, partly in section showing a bared cable ready for splicing with prepositioned components of the assembly according to the invention;
- Figure 2: is a side elevation partly in section showing the cable of Figure 1 spliced to an other similarly prepared cable, with the assembly components positioned ready for installation; and
- Figure 3: is a side elevation, partly in section showing the assembly shown in Figure 2 installed over the spliced cable.

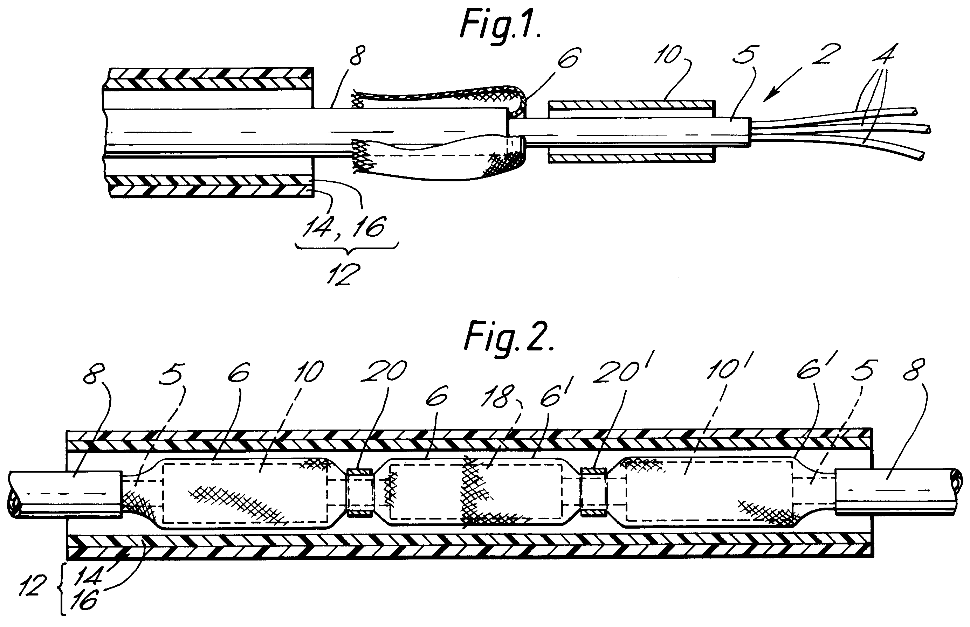

Referring to the drawings, Figure 1 shows a cable 2, bared ready for splicing and axial stress relief. The cable 2 comprises three insulated conductors 4, insulating sheath 5, a metallic braid layer 6, and an outermost PVC jacket layer 8. The braid 6 has been cut back to expose a length of conductors 4 for splicing to the end of a similarly prepared cable. The braid 6 has been bared of outer PVC jacket 8 a sufficient distance to allow an annular metallic spacer tube 10 to be positioned over the insulating sheath 5. The braid 6 is folded back over the PVC jacket has shown in Figure 1) to allow insertion of the spacer tube 10, but is later rolled back, sandwiching the spacer tube between itself and the insulating sheath 5. The rolled back braid 6 is long enough to cover the spacer tube 10 and crimps which are later used to connect the conductors 4. Only part of the length of the braid 6 is shown in Figure 1. A tubular support sleeve 12 comprising a heat recoverable fabric layer 14 is prepositioned over the bared cable, for later installation over the formed splice. The heat recoverable fabric layer 14 comprises circumferential heat shrunkable fibres, axial glass fibres and an outer laminate of polymeric material. Laminated to the inner surface of sleeve 14 is a lining sleeve 16 of a thermoplastic bonding material.

Figure 2 shows a subsequent stage in the installation. the conductors 4 have been spliced to corresponding conductors in a similar cable by a series of crimps represented by block 18. the braid 6 on one cable has been rolled back over the spacer tube 10 and the crimps 18, and its ends taped down by tape 20 on the far side of the crimps 18. The braid 6′ on the other cable has been rolled back over a similar tube 10′ over the crimps 18 and braid 6 and taped on the other side of the crimps 18 by tape 20′. The sleeve 12 has been positioned over the crimp 18 and spacer tubes 10. The length of the sleeve 12 is such that it extends slightly onto the pvc jacket 8 on each cable. Protective lining paper (not shown) may be applied around the crimp area before positioning of the support sleeve 12. An aluminium wrap (not shown) may be positioned around the crimps 18 (outside braids 6 and 6′) to provide improved moisture impermeability in the spliced region.

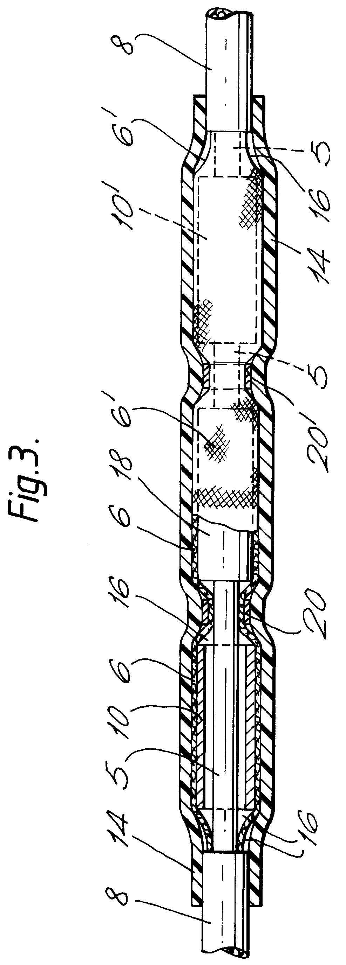

To install the assembly heat is applied, for example by a hot air gun or flame torch. This causes sleeve 14 to shrink and the bonding material 16 to flow. The bonding material flows through the openings in the braid 6 bonding to the sleeve 14 to the braid 6 and to the spacer tubes 10. A composite structure is thus provided between these components. This composite structure is shown in Figure 3.

A comparative test to show the unexpectedly improved and effective load transfer to the support sleeve 12 which is achieved by using the spacer tubes 6 was conducted. First an assembly made according to the previous description was subjected to creep testing under an axial loading of 1500N at a constant temperature of 60°C. Then, a comparative assembly made with identical components, but omitting the spacer tubes 10 was made and subjected to the same test. The results are set out in the table below.

**TABLE 1**

| | |
|---|---|
| Assembly with support tubes | 5mm creep after 8040 minutes No futher creep after 43920 minutes. |
| Assembly without spacer tubes | 18mm creep after 52 minutes |

As can be seen the creep resistance is greatly enhanced by use of the spacer tubes.

## Claims

1. An assembly for providing axial strain relief to a splice between two cables (2) that each comprise an apertured layer (6, 6'); the assembly comprising:
(a) a spacer (10,10') that can be positioned to space the apertured layers of each cable from the inner components thereof;
(b) a support sleeve (12) that can be positioned to surround each of the apertured layers
characterized by
(c) a bonding material (16) which can flow during installation of the assembly through the apertured layers, to bond the sleeve (12) to each of the apertured layers (6, 6').

2. An assembly according to claim 1, wherein when the spacers are positioned to space the apertured layers from their inner components, the apertures of the layers increase in size.

3. An assembly according to claim 1 or 2, wherein the spacers comprise material that can be bonded by the bonding material to the sleeve.

4. An assembly according to any preceding claim of wherein the support sleeve comprises fabric.

5. An assembly according to any preceding claim, wherein the support sleeve comprises polymeric material to provide environmental protection.

6. An assembly according to any preceding claim wherein the support sleeve is heat recoverable.

7. An assembly according to any preceding claim wherein at least two spacers are provided, one on each cable.

8. A method of providing axial strain relief to a splice between two cables (2) that each comprise an apertured layer (6,6') comprising
(1) positioning a spacer (10, 10') on each cable to space the apertured layer from the inner component of the cable (2),
(2) positioning a support sleeve (12) around the spaced apertured layers (6,6')
characterized by
(3) providing bonding material (14),
(4) causing the bonding material (14) to flow through the apertures of apertured layers (6, 6') to bond in support sleeve (12) to the apertured layers (6,6').

9. A method according to claim 8 comprising baring at least part of the portions of the apertured layer which lie beneath the support sleeve.

10. A method according to claim 8 or 9, using an assembly accordingly to any of the claims 1 to 6.

11. A strain relieved splice between two cables each of which comprises an apertured layer comprising a spacer positioned on each cable to space the apertured layer from the inner components and a sealing sleeve (12) positioned around the apertured layers (6, 6') characterized by a bonding material (14) which has flowed through the apertured layers (6, 6') to bond the sleeve (12) to the apertured layer (6, 6') and preferably also to the spacer (10, 10').

12. A strain relieved splice according to claim 11 made using an assembly according to any of the claims 1 to 6.

## Patentansprüche

1. Anordnung, um eine axiale Zugentlastung einer Spleißstelle zwischen zwei Kabeln (2) zu bewirken, die jeweils eine mit Öffnungen versehene Schicht (6, 6') aufweisen; wobei die Anordnung folgendes aufweist:
(a) einen Abstandshalter (10, 10'), der positioniert werden kann, um die mit Öffnungen versehenen Schichten jedes Kabels von dessen inneren Komponenten zu beabstanden;
(b) eine Traghülse (12), die positioniert werden kann, um jede der mit Öffnungen versehenen Schichten zu umgeben,
gekennzeichnet durch
(c) ein Verbindungsmaterial (16), das während der Installation der Anordnung durch die mit Öffnungen versehenen Schichten fließen kann, um die Hülse (12) mit jeder der mit Öffnungen versehenen Schichten (6, 6') zu verbinden.

2. Anordnung nach Anspruch 1, wobei, wenn die Abstandshalter positioniert werden, um die mit Öffnungen versehenen Schichten von ihren inneren Komponenten zu beabstanden, die Öffnungen der Schichten größer werden.

3. Anordnung nach Anspruch 1 oder 2, wobei die Abstandshalter Material aufweisen, das durch das Verbindungsmaterial mit der Hülse verbunden werden kann.

4. Anordnung nach einem der vorhergehenden Ansprüche, wobei die Traghülse textiles Flächengebilde aufweist.

5. Anordnung nach einem der vorhergehenden Ansprüche, wobei die Traghülse polymeres Material aufweist, um Schutz gegenüber der Umgebung zu bieten.

6. Anordnung nach einem der vorhergehenden Ansprüche, wobei die Traghülse wärmerückstellbar ist.

7. Anordnung nach einem der vorhergehenden Ansprüche, wobei mindestens zwei Abstandshalter vorgesehen sind, und zwar einer auf jedem Kabel.

8. Verfahren, um eine axiale Zugentlastung einer Spleißstelle zwischen zwei Kabeln (2) zu bewirken, die jeweils eine mit Öffnungen versehene Schicht (6, 6') aufweisen, wobei das Verfahren folgende Schritte aufweist:
(1) Positionieren eines Abstandshalters (10, 10') auf jedem Kabel, um die mit Öffnungen versehene Schicht von der inneren Komponente des Kabels (2) zu beabstanden,
(2) Positionieren einer Traghülse (12) um die beabstandeten, mit Öffnungen versehenen Schichten (6, 6') herum,
gekennzeichnet durch
(3) Vorsehen von Verbindungsmaterial (14),
(4) Veranlassen des Verbindungsmaterials (14) durch die Öffnungen der mit Öffnungen versehenen Schichten (6, 6') zu fließen, um die Traghülse (12) mit den mit Öffnungen versehenen Schichten (6, 6') zu verbinden.

9. Verfahren nach Anspruch 8, das folgenden Schritt aufweist: Freilegen mindestens eines Teils der Bereiche der mit Öffnungen versehenen Schicht, die unter der Traghülse liegen.

10. Verfahren nach Anspruch 8 oder 9, bei dem eine Anordnung nach einem der Ansprüche 1 bis 6 verwendet wird.

11. Zugentlastete Spleißstelle zwischen zwei Kabeln, von denen jede eine mit Öffnungen versehene Schicht aufweist, wobei die Spleißstelle aufweist: einen Abstandshalter, der auf jedem Kabel positioniert ist, um die mit Öffnungen versehene Schicht von den inneren Komponenten zu beabstanden, und eine Abdichthülse (12), die um die mit Öffnungen versehenen Schichten (6, 6') herum positioniert ist, gekennzeichnet durch ein Verbindungsmaterial (14), das durch die mit Öffnungen versehenen Schichten (6, 6') geflossen ist, um die Hülse (12) mit der mit Öffnungen versehenen Schicht (6, 6') und bevorzugt auch mit dem Abstandshalter (10, 10') zu verbinden.

12. Zugentlastete Spleißstelle nach Anspruch 11, die unter Verwendung einer Anordnung nach einem der Ansprüche 1 bis 6 hergestellt ist.

## Revendications

1. Assemblage pour fournir une atténuation des contraintes axiales sur une épissure entre deux câbles (2) comportant chacun une couche avec des interstices (6, 6'); l'assemblage comprenant:
(a) une entretoise (10, 10') qui peut être disposée pour espacer les couches à interstices de chaque câble de leurs composants internes;
(b) un manchon support (12) qui peut être disposé pour entourer chacune des couches à interstices,
caractérisé par
(c) un matériau de liaison (16) qui peut circuler au cours de l'installation de l'assemblage dans les couches à interstices, pour relier le manchon (12) à chacune des couches à interstices (6, 6').

2. Assemblage selon la revendication 1, dans lequel lorsque les entretoises sont disposées pour espacer les couches à interstices de leurs composants internes, les interstices des couches s'agrandissent.

3. Assemblage selon la revendication 1 ou 2, dans lequel les entretoises comportent un matériau qui peut être relié au manchon par le matériau de liaison.

4. Assemblage selon l'une quelconque des revendications précédentes, dans lequel le manchon support comporte un tissu.

5. Assemblage selon l'une quelconque des revendications précédentes, dans lequel le manchon support comporte un matériau polymérique pour une protection contre l'environnement.

6. Assemblage selon l'une quelconque des revendications précédentes, dans lequel le manchon support est thermorétractable.

7. Assemblage selon l'une quelconque des revendications précédentes, dans lequel au moins deux entretoises sont prévues, une sur chaque câble.

8. Procédé de réalisation d'une atténuation de contrainte axiale sur une épissure entre deux câbles (2) qui comportent chacun une couche avec des interstices (6, 6') comprenant
(1) le positionnement d'une entretoise (10, 10') sur chaque câble pour espacer la couche avec des interstices du composant interne du câble (2),
(2) le positionnement d'un manchon support (12) autour des couches à interstices espacées (6, 6'),
caractérisé par
(3) la fourniture d'un matériau de liaison (14),
(4) la circulation du matériau de liaison (14) dans les interstices des couches à interstices (6, 6') pour la liaison du manchon support (12) aux couches à interstices (6, 6').

9. Procédé selon la revendication 8 comprenant le dénudage d'au moins une partie des parties de la couche avec des interstices qui se trouvent sous le manchon support.

10. Procédé selon la revendication 8 ou 9, utilisant un assemblage selon l'une quelconque des revendications 1 à 6.

11. Epissure soulagée des contraintes, entre deux câbles comprenant chacun une couche avec des interstices, comportant une entretoise disposée sur chaque câble pour espacer la couche avec des interstices des composants internes et un manchon (12) d'étanchéité disposé autour des couches avec des interstices (6, 6'), caractérisée par un matériau de liaison (14) qui a circulé dans les couches avec des interstices (6, 6') pour relier le manchon (12) à la couche avec des interstices (6, 6') et de préférence aussi à l'entretoise (10, 10').

12. Epissure soulagée des contraintes selon la revendication 11, réalisée en utilisant un assemblage conforme à l'une quelconque des revendications 1 à 6.
